Europäisches Patentamt

European Patent Office

Office européen des brevets

(19)

(11) **EP 0 597 822 B1**

(12) **EUROPÄISCHE PATENTSCHRIFT**

| | |
|---|---|
| (45) Veröffentlichungstag und Bekanntmachung des Hinweises auf die Patenterteilung:<br>**26.06.1996 Patentblatt 1996/26** | (51) Int Cl.⁶: **F25B 15/02**, F25B 25/02,<br>F01K 17/00, F01K 25/06 |

(21) Anmeldenummer: **94101668.5**

(22) Anmeldetag: **24.03.1982**

(54) **Mehrstufige Einrichtung mit Arbeitsfluid- und Absorptionsmittel-Kreisläufen, und Verfahren zum Betrieb einer solchen Einrichtung**

Multi-stage apparatus with circulation circuits for working fluids and for absorbing media, and method of operating such an apparatus

Appareil multi-étage avec des circuits de circulation pour des fluides de travail et des fluides d'absorption et procédé pour l'exploitation d'un tel appareil

| | |
|---|---|
| (84) Benannte Vertragsstaaten:<br>**DE FR IT** | (72) Erfinder: **Alefeld, Georg, Prof. Dr.**<br>**verstorben (DE)** |
| (30) Priorität: **24.03.1981 DE 3111552**<br>**28.04.1981 DE 3116788**<br>**19.06.1981 DE 3124007**<br>**17.08.1981 DE 3132461**<br>**12.02.1982 DE 3204902**<br>**18.02.1982 DE 3205872** | (74) Vertreter: **Schütz, Peter, Dipl.-Ing. et al**<br>**Dr. Dieter von Bezold**<br>**Dipl.-Ing. Peter Schütz**<br>**Dipl.-Ing. Wolfgang Heusler**<br>**Brienner Strasse 52**<br>**D-80333 München (DE)** |
| (43) Veröffentlichungstag der Anmeldung:<br>**18.05.1994 Patentblatt 1994/20** | (56) Entgegenhaltungen: |
| (62) Anmeldenummer der früheren Anmeldung nach Art. 76 EPÜ: **82102473.4** | WO-A-82/00707     BE-A- 875 277<br>DE-A- 1 601 003    DE-A- 2 944 960<br>DE-B- 1 015 455    DE-C- 278 076<br>DE-C- 678 942     DE-C- 953 378<br>US-A- 2 182 098   US-A- 2 182 453<br>US-A- 3 440 832   US-A- 3 483 710<br>US-A- 3 837 174   US-A- 3 854 301<br>US-A- 4 009 575 |
| (73) Patentinhaber: **Alefeld, geb. Dengscherz, Helga Erika Marie**<br>**80805 München (DE)** | |

**Beschreibung**

Die vorliegende Erfindung betrifft eine mehrstufige Einrichtung zum Nutzbarmachen von Wärmeenergie, die mit Sorptionsprozessen arbeitet und Arbeitsfluidkreisläufe sowie Abscrptionsmittelkreisläufe enthält. Ferner betrifft die Erfindung ein Verfahren zum Betrieb einer solchen Einrichtung.

In einem Absorptionsmittelkreislauf wird ein Arbeitsfluid in einem Absorptionsmittel absorbiert oder gelöst, in ein anderes Druckniveau übergeführt und dort wieder desorbiert oder verdampft.( Die Begriffe Absorptionsmittel-Lösungsmittel, Absorbieren-Lösen-Resorbieren bzw. Verdampfen-Desorbieren sollen hier technisch äquivalent angesehen werden).

In einem Arbeitsfluidkreislauf zirkuliert Arbeitsfluid teils im gasförmigen, teils im flüssigen und/oder absorbierten Zustand. Im absorbierten Zustand wird das Arbeitsfluid in einem Teil eines Absorptionsmittelkreislaufes transportiert. Ein Arbeitsfluidkreislauf enthält also dann den arbeitsfluidreiches Absorptionsmittel führenden Teil mindestens eines Absorptionsmittelkreislaufes.

Typische, bekannte Einrichtungen dieser Gattung:

a) <u>Die Absorberwärmepumpe und die Absorberkältemaschine.</u>

Beide arbeiten auf dem gleichen Prinzip: Mittels Antriebswärmeenergie hoher Temperatur wird zugeführte Wärmeenergie niedriger Temperatur auf ein mittleres Temperaturniveau gehoben. (Die Begriffe "hoch", "mittel" und "niedrig" sind hier und im folgenden, soweit sich aus dem zugehörigen Text nichts anderes ergibt, als relativ zu verstehen).

b) <u>Der Wärmetransformator.</u>

Ein Wärmetransformator ist eine Einrichtung, die aus zugeführter Wärmeenergie mittlerer Temperaturen Ausgangs-Wärmeenergie hoher Temperatur erzeugt, wobei außerdem Abwärme niedriger Temperatur entsteht.

Ein <u>Absorberkreislauf</u> ist ein Arbeitsfluidkreislauf, der mindestens einen Absorptionsmittelkreislauf enthält. Die wesentlichsten Komponenten eines Absorberkreislaufes sind Austreiber, Kondensator, Verdampfer und Absorber, deren Funktionen als bekannt vorausgesetzt werden können. Diese Komponenten sollen hier als "Austauscheinheiten" bezeichnet werden.

Eine <u>Austauscheinheit</u> ist also eine Komponente eines Arbeitsfluidkreislaufes, in der zumindest bei bestimmten Betriebsarten der Einrichtung der Wärmeinhalt des in der betreffenden Einheit enthaltenen Arbeitsfluids und gegebenenfalls des Absorptionsmittels geändert wird. Dabei ändert sich im allgemeinen der Phasenzustand des Arbeitsfluids durch Desorbieren (im Austreiber), durch Kondensieren (im Kondensator), durch Verdampfen (im Verdampfer) und durch Absorbieren (im Absorber). Die Funktionen mancher Austauscheinheiten der vorliegenden Einrichtungen kann bei verschiedenen Betriebsarten der betreffenden Einrichtung verschieden sein.

Die Begriffe "Austreiber" und "Absorber" sollen auch für Austauscheinheiten verwendet werden, die die Funktionen "Desorber" und "Resorber" in einer Resorptionsmaschine ausüben.

<u>Stand der Technik</u>

Einstufige, also einen einzigen Arbeitsfluidkreislauf enthaltende Absorber-Kältemaschinen und Wärmepumpen (siehe z.B. ASHRAE Handbook of Fundamentals, S. 19-24) haben einen hohen Entwicklungsstand erreicht.

Mehrstufige Absorptions-Kältemaschinen sind z.B. aus Niebergall , W.; Sorptions-Kältemaschinen HANDBUCH DER KÄLTETECHNIK , Band 7 Hrsg. R. Plank, Berlin-New York - Heidelberg, Springer-Verlag 1959, insbesondere S. 71 bis 91, bekannt.

Weitere mehrstufige Absorptions-Kältemaschinen sind bekannt aus:

DE-C-278 076 (Altenkirch u.a.);
Altenkirch, E., Zeitschrift für die gesamte Kälteindustrie <u>21</u> (1914) S. 6-14 und 21-24;
Richter, K.H., Journal of Refrigeration <u>5</u> (1962), S. 105-111;
Nesselmann, K., Zeitschrift für die gesamte Kälteindustrie <u>41</u> (1934) S. 73-79;
Chinappa J.C.V. et al, Solar Energy <u>18</u>, (1976) S. 337-342;
DE-A-29 44 960 (Sanyo);
DE-A-30 14 320 (Rojey);
DE-B-15 01 141 (Space Conditioning);
DE-B- 21 36 408;(Carrier Co.)
US-C-38 48 430 (Trane).

Aus den oben genannten Veröffentlichungen von Altenkirch ist es auch bekannt, mit der Methode der sogenannten "übergreifenden Temperatur" zu arbeiten. Bei dieser Methode wird die Entgasung des Absorptionsmittels im Austreiber sc weit getrieben, daß die höchsten Absorbertemperaturen wesentlich über die tiefsten Temperaturen des Austreibers hinausgehen, und es wird ein Wärmeaustausch zwischen den kältesten Teilen des Austreibers und den wärmsten Teilen des Absorbers durchgeführt.

Mehrstufige Wärmetransformatorschaltungen sind bekannt aus DE-C-50 81 21 (Altenkirch).

Die vorliegende Erfindung geht aus von einer mehrstufigen Einrichtung zur Nutzbarmachung von Wärmeenergie mit mehreren Austauscheinheiten, die in mindestens zwei Arbeitsmittelkreisläufen und mindestens zwei Absorptionsmittelkreisläufen enthalten sind, in denen Druck- und Temperaturniveaus des Arbeitsmittels durch Zuführung beziehungsweise Entnahme von Wärme geändert werden, wobei unter einer Austauscheinheit Austreiber (Desorber), Kondensatoren, Verdampfer, und Absorber (Resorber) zu verstehen sind. Die aus dem oben bereits erwähnten Dokument DE-C-278 067 (Altenkirch et al.) bekannten Einrichtungen dieser Art enthalten sechs oder acht Austauscheinheiten.

Der vorliegenden Erfindung liegt die Aufgabe zugrunde, neue Einrichtungen der oben genannten allgemeinen Art anzugeben, die für Anwendungszwecke geeignet sind, welche mit den bekannten Einrichtungen nicht befriedigend erfüllt werden können, z. B. für Anwendungen, bei denen nur Wärmeenergie relativ niedriger Qualität für den Antrieb der Einrichtungen zur Verfügung steht.

Gemäß der vorliegenden Erfindung ist eine Einrichtung der oben genannten Art dadurch gekennzeichnet, daß sie zwei Arbeitsmittelkreisläufe mit insgesamt sieben Austauscheinheiten enthält, von denen eine beiden Kreisläufen gemeinsam ist, wobei bei einer Einrichtung, bei der jeweils zwei Austauscheinheiten in einem oberen und einem unteren Druckbereich und drei Austauscheinheiten in einem mittleren Druckbereich arbeiten, die gemeinsame Austauscheinheit im niedrigsten Temperaturbereich des mittleren Druckbereichs arbeitet und das Arbeitsmittel in beiden Kreisläufen im Sinne eines Wärmepumpenbetriebes zirkuliert, zusätzlich eine der Bedingungen a) und b) erfüllt ist:

a) zwischen mindestens zwei Austauscheinheiten findet ein innerer Wärmetausch statt;

b) bei vorgegebenen Drücken hat das Arbeitsmittelsystem eines Absorptions - mittelkreislaufes, welcher einen mit einem höheren Druck arbeitenden von zwei Austreibern enthält, eine Dampfdruckkurve, die bei höherer Temperatur liegt als die Dampfdruckkurve des Arbeitsmittelsystems in einem Absorptionsmittelkreislauf, der den anderen, bei niedrigem Druck arbeitenden Austreiber enthält,

und wobei bei einer Einrichtung, bei der jeweils zwei Austauscheinheiten in einem höheren und einem mittleren Druckbereich und drei Austauscheinheiten in einem unteren Druckbereich arbeiten, die gemeinsame Austauscheinheit im niedrigsten Druck- und Temperaturbereich arbeitet, und das Arbeitsmittel in beiden Kreisläufen im gleichen Sinne zirkuliert und zwischen mindestens zwei Austauscheinheiten ein innerer Wärmeaustausch stattfindet.

Weitere Ausgestaltungen und vorteilhafte Weiterbildungen sowie ein vorteilhaftes Verfahren zum Betrieb dieser Einrichtung sind Gegenstand der Ansprüche 2 bis 14.

Die erfindungsgemäße Einrichtung ermöglich es Absorbermaschinen unter Bedingungen einzusetzen, für die sich die bekannten Einrichtungen nicht eignen, z. B. Wärmeenergie niedriger Qualität oder Temperatur nutzbar zu machen,

Im folgenden werden Ausführungsbeispiele der Erfindung unter Bezugnahme auf die Zeichnungen näher erläutert. Es zeigen:

Fig. 1          eine schematische Darstellung eines elementaren Absorberkreises;

Fig. 2          eine stark schematisierte, schaltbildartige Darstellung der Klassen von zwei stufigen Absorbereinrichtungen, die man erhält, wenn man zwei elementare Absorberkreise der in Fig. 1 dargestellten Art so vereinigt, daß die beiden Absorberkreise eine Austauscheinheit gemeinsam haben.

Fig. 3          Tabellen zur Erläuterung der Möglichkeiten des inneren Wärmetausches bei Einrichtungen gemäß Fig. 2;

Fig. 4          schematische Darstellungen von Absorbereinrichtungen gemäß Fig. 2 mit einer durch einen ausgefüllten Kreis dargestellten zusätzlichen Austausch einheit zum Ausgleich der Wärmebilanz bei zweifachem vollständigem innerem Wärmeaustausch;

Fig. 5 und 6    schematische Darstellungen spezieller vorteilhafter Ausführungsformen der Erfindung.

Bei der schematischen Darstellung der Vorliegenden Einrichtungen wird eine Form gewählt, aus der nicht nur die Anzahl und die Verbindungen der Hauptkomponenten entnommen werden können, sondern bei der die relative Lage der Komponenten in einem In p/ - 1/T-Diagramm der relative Betriebsdruck und die relative Betriebstemperatur der Komponenten der Einrichtung ersichtlich ist. Die Symbolik dieser Darstellung, die eine Mischung aus Anlageschema und Prozeßschema im ln p/ - 1/T-Diagramm darstellt, erlaubt eine einfache und rasche Anwendung des im folgenden augewandten Superpositionsprinzips.

Zur Vereinfachung soll im folgenden für eine Wärmeleistung (Maßeinheit Watt oder kcal/h) kurz der Begriff "Wärme" verwendet werden.

Im Interesse einer einfachen Klassifizierung der Typen der vorliegenden Einrichtungen und ihrer Betriebszustände soll ferner als Vereinfachung vereinbart werden, daß die Menge des Arbeitsfluids, das eine Phasenänderung erleidet, und die Wärmeleistung der betreffenden Austauscheinheit einander proportional sind, so daß dieselbe Größe, wie z. B. m oder n, sowohl für die pro Zeiteinheit umgesetzte Wärmemenge Q als auch für die pro Zeiteinheit umgesetzte Menge am Arbeitsfluid verwendet werden kann. Bei der Beschreibung und Darstellung der Einrichtungen sind außerdem die Druckabfälle, die in den vom Arbeitsfluid durchströmten Leitungen, Austauscheinheiten und dergl. auftreten, nicht erwähnt bzw. gezeigt. Es sei jedoch betont, daß die Gültigkeit der wichtigsten Schlüsse, die im folgenden gezogen werden, von diesen Näherungsannahmen unabhängig sind.

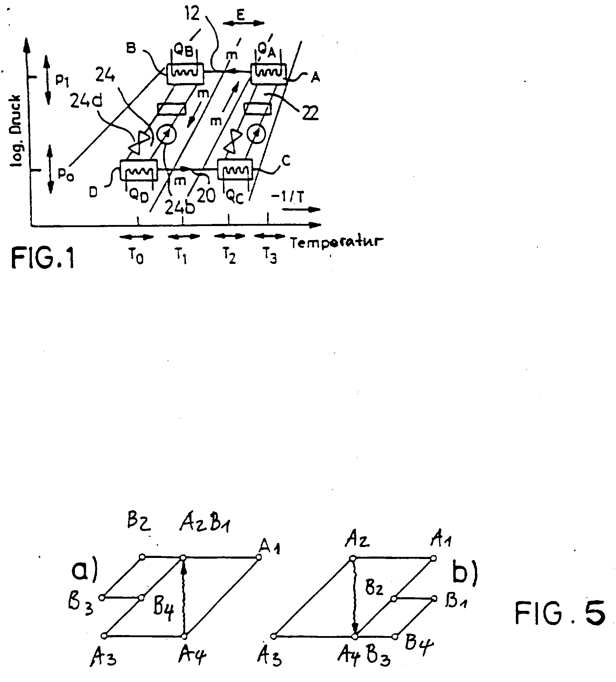

Unter einem "vollständigen Kreislauf" soll definitonsgemäß eine solche Verbindung von Austauscheinheiten verstanden werden, die ohne weitere Hauptkomponenten schon einen stationären Betrieb als Einrichtung zur Nutzbarmachung von Wärmeenergie erlaubt und bei der die umgesetzten Wärmen durch die Angabe von Betrag und Richtung eines einzigen Arbeitsfluidstromes bestimmt sind. Im einfachsten Falle besteht ein vollständiger Kreislauf aus einem einstufigen Absorbermaschinenkreislauf gemäß Fig. 1.

In Fig. 1 sind auch die Dampfdruckkurven des Arbeitsmittelsystems dargestellt, wobei $\xi$ die Konzentration des Arbeitsfluids im flüssigen Absorptionsmittel bedeutet. Der elementare Absorberkreis gemäß Fig. 1 enthält vier Austauscheinheiten A, B, C und D. Die Austauscheinheiten A und B arbeiten in einem relativ hohen Druckbereich $P_1$ die Austauscheinheiten C und D in einem relativ niedrigen Druckbereich $p_0$. Die Austauscheinheiten D , B, C, und A arbeiten in den Temperaturbereichen $T_0$, $T_1$, $T_2$ bzw. $T_3$, deren mittlere Temperaturen in der angegebenen Reihenfolge zunehmen. Die Austauscheinheiten A und B sind durch eine Arbeitsfluidleitung 12, die Austauscheinheiten C und D durch eine Arbeitsfluidleitung 20 verbunden. Die Austauscheinheiten A und C sind durch einen Absorptionsmittelkreislauf 22 verbunden, die Austauscheinheiten B und D durch einen Absorptionsmittelkreislauf 24. Bei allen Schaltungen, die Absorberkreise gemäß Fig. 1 enthalten, können die im ln p/-1/T-Diagramm am weitesten links oben gelegenen Paare miteinander gekoppelter Austauscheinheiten, also bei Fig. 1 die Austauscheinheiten B und D anstatt durch einen Absorptionsmittelkreislauf auch durch eine einfache Arbeitsfluidleitung verbunden sein, die je nach dem Umlaufsinn des Arbeitsfluids eine Drossel 24d oder eine Pumpe 24b für das zwischen diesen beiden Austauscheinheiten transportierte Arbeitsfluid enthält.

Jedes Paar von Austauscheinheiten, z.B. A, C und B-D, welche durch einen Absorptionsmittelkreislauf oder durch eine Arbeitsfluidleitung, die eine Druckänderungsvorrichtung (Drossel, Pumpe) enthält, kann bezüglich der anderen Paare von Austauscheinheiten der Schaltung längs der Temperaturachse nach Wunsch verschoben werden. Man kann also z.B. das Austauscheinheitenpaar B-D in Fig. 1 so weit nach rechts verschieben, daß die Temperaturbereiche $T_1$ und $T_2$ zusammenfallen, und sogar darüber hinaus , so daß die Austauscheinheit B bei höherer Temperatur arbeitet als die Austauscheinheit C. Die Austauscheinheiten A bis D sind jeweils mit einer schematisch angedeuteten Vorrichtung zur Zuführung oder Entnahme von Wärme $Q_A$, $Q_B$, $Q_C$ bzw. $Q_D$ dargestellt.

Bei einem Paar von Austauscheinheiten, die durch einen Absorptionskreislauf (oder eine entsprechende Arbeitsfluidleitung, die eine Druckänderungsvorrichtung enthält), gekoppelt sind (z.B. A und C oder B und D in Fig. 1), besteht zwischen den mittleren Temperaturen $T_1$ und $T_2$ der Temperaturbereiche und den mittleren Drücken $p_1$ und $p_2$ der Druckbereiche, in denen diese Austauscheinheiten arbeiten, die folgende Beziehung

$$T_2 - T_1 = \frac{RT_2 \cdot T_1}{\Delta H} \ln \frac{p_2}{p_1}$$

wobei

$$\Delta H = R\frac{d \ln p}{d \, 1/T}$$

die mittlere Steigung der Dampfdruckkurve des Arbeitsfluids bei der jeweiligen Konzentration des Absorptionsmittels und R die universelle Gaskonstante bedeuten.

In jeder Einrichtung gibt es eine bestimmte maximale Anzahl von vollständigen Kreisläufen, in denen der Arbeitsfluidstrom nach Betrag und Richtung beliebig, also unabhängig von den anderen vollständigen Kreisläufen gewählt werden kann. Die maximale Zahl der vollständigen Kreisläufe, in denen der Arbeitsfluidstrom nach Betrag und Richtung gewählt werden kann ("unabhängige Kreisläufe") ist nach der folgenden Formel berechenbar:

1 plus Anzahl der Verbindungen zwischen Austauscheinheiten auf verschiedenen Druckniveaus abzüglich Anzahl der miteinander verbundenen Druckniveaus (Knotenpunktsgleichung).

Durch spezielle Wahl der Verhältnisse der Beträge von Arbeitsfluidströmen und deren Richtungen kann ein partieller oder sogar vollständiger innerer Wärmeaustausch zwischen zwei oder mehr Austauscheinheiten ermöglicht werden (die verschiedenen vollständigen Kreisläufen angehören müssen).

In den im folgenden beschriebenen Figuren sind die Einrichtungen gemäß der Erfindung stark schematisiert dargestellt und zwar werden Autauscheinheiten durch kleine Kreise und Arbeitsfluidleitungen sowie Absorptionsmittelkreisläufe durch einfache Striche dargestellt. Alle Nebenkomponenten, z.B. Lösungswärmetauscher, pumpen, Drosselorgane n.s.w., sind weggelassen. Bezüglich der Fülhrüng der Absorptions mittelkreisläufe wird aüf EP-A-0 061 721 verwiesen.

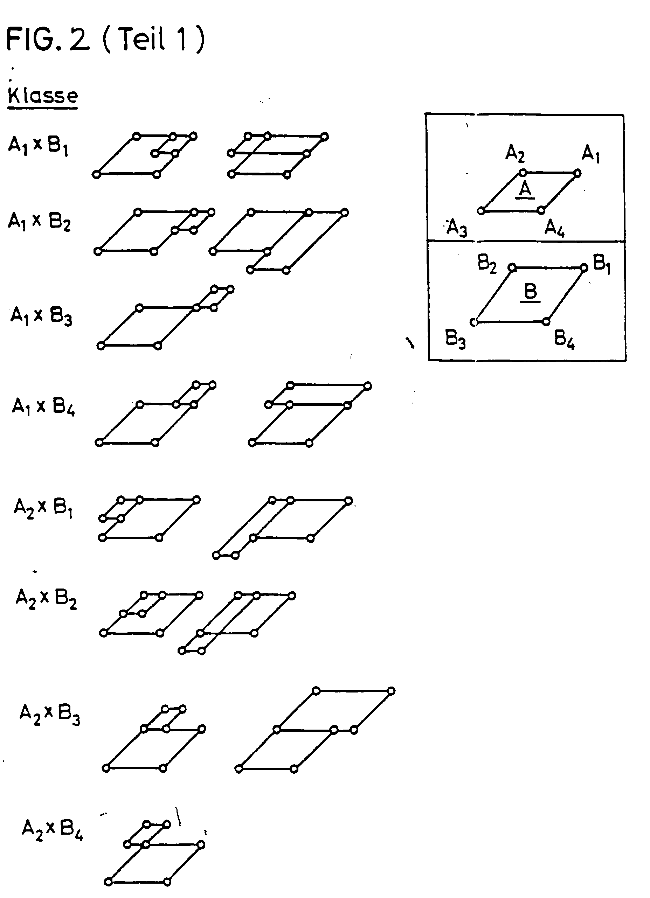

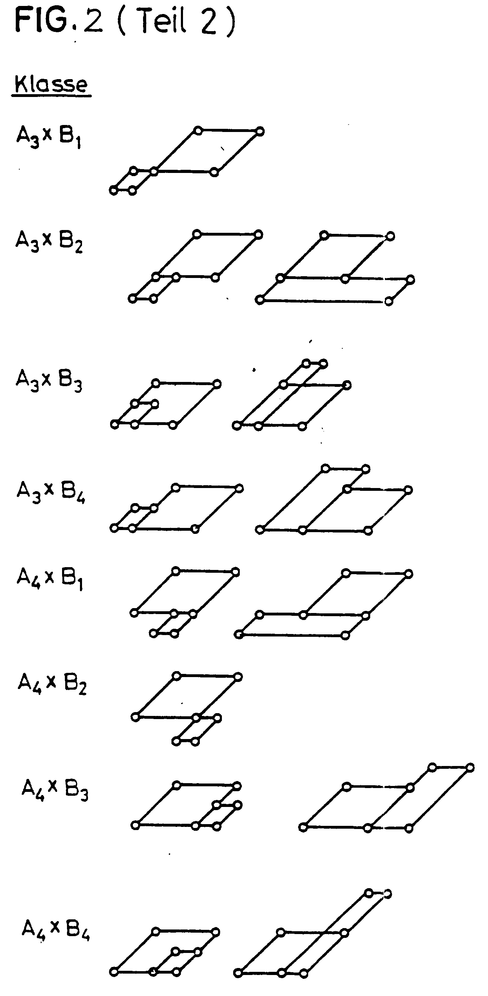

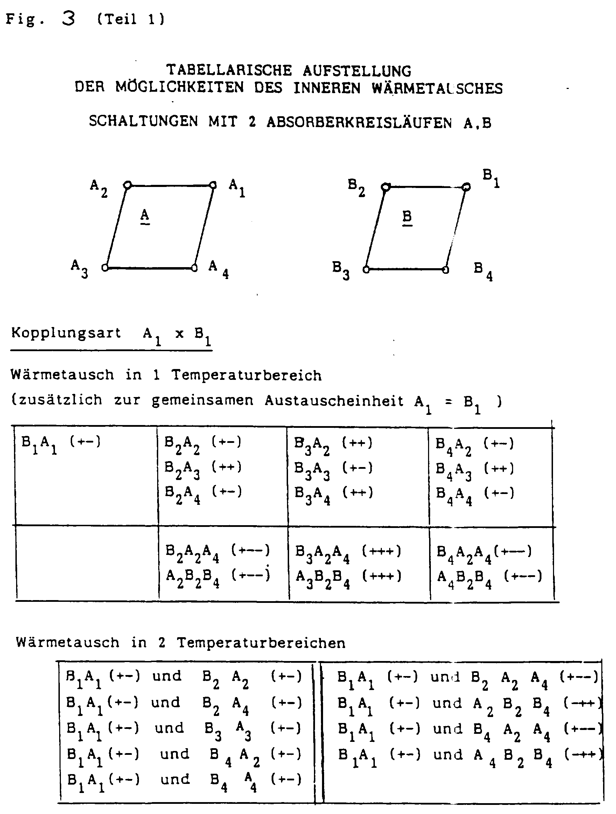

Fig. 2. zeigt die sechzehn Klassen, die sich dadurch ergeben, daß zwei elementare Absorberkreisläufe gem. Fig. 1 durch eine einzige gemeinsame Austauscheinheit gekoppelt werden. Ferner sind in Fig. 2 Beispiele von Elementen dieser Klassen, die sich durch die oben erwähnte Variation der Betriebsparameter ergeben, dargestellt. Der Kreis A ist in allen Darstellungen gleich dargestellt (siehe Fig. 2 recht oben) und die Austauscheinheiten der beiden Kreise sind in der beim Kreis A dargestellten Weise numeriert. $A_i$ x $B_j$ bedeutet, daß die Austauscheinheit i des Kreises A mit der Austauscheinheit j des Kreises B zusammenfällt.

### Zweistufige Absorbermaschinen gem. Fig. 2

Für die in Fig. 2 dargestellten 16 Klassen von zweistufigen Absorbermaschinen, von denen nur zehn wesentlich verschieden voneinander sind, gibtes jeweils vier Typen von Absorbermaschinen entsprechend den vier Vorzeichenkombinationen (++), (+-), (-+), (--) der Arbeitsfluidströme in den beiden miteinander verbundenen unabhängigen Kreisläufen.

(+) bedeutet, daß das Arbeitsfluid in Gegenuhrzeigerrichtung zirkuliert (Wärmepumpenbetrieb des betr. Absorberkreises);

(-) bedeutet, daß das Arbeitsfluid in Uhrzeigerrichtung zirkuliert (Wärmetransformatorbetrieb).

Die Einrichtungen mit Schaltungen gem. Fig. 2 arbeiten mit drei Druckbereichen und im allgemeinsten Falle mit sieben Temperaturbereichen, die durch geeignete Wahl der Betriebsparameter bei einigen Schaltungen auf vier ggf. sogar auf drei Temperaturbereiche reduzieren lassen. Besonders vorteilhaft sind im allgemeinen Einrichtungen, die für Betriebszustände konstruiert sind, bei denen ein teilweiser oder vollständiger innerer Wärmetausch zwischen Austauscheinheiten, die verschiedenen elementaren Kreisen angehören, stattfindet. Die Anzahl der Temperaturbereiche, bei denen der Einrichtung von außen Wärme zu- oder abgeführt wird, läßt sich dann beimehreren Klassen bis auf drei reduzieren. Die Anzahl der Druckbereiche ist immer drei.

Bei Einrichtungen gem. Fig. 2, die mit vier Temperaturbereichen arbeiten, gibt es im allgemeinen die in Tabelle 1 aufgeführten acht Betriebsbereiche. Bei fünf Temperaturbereichen gibt es im allgemeinen Falle 22 Betriebsbereiche, für die die Vorzeichen der Nettowärmeumsätze $Q_0$ bis $Q_4$ in den fünf Temperaturbereichen in Tabelle 2 aufgeführt sind.

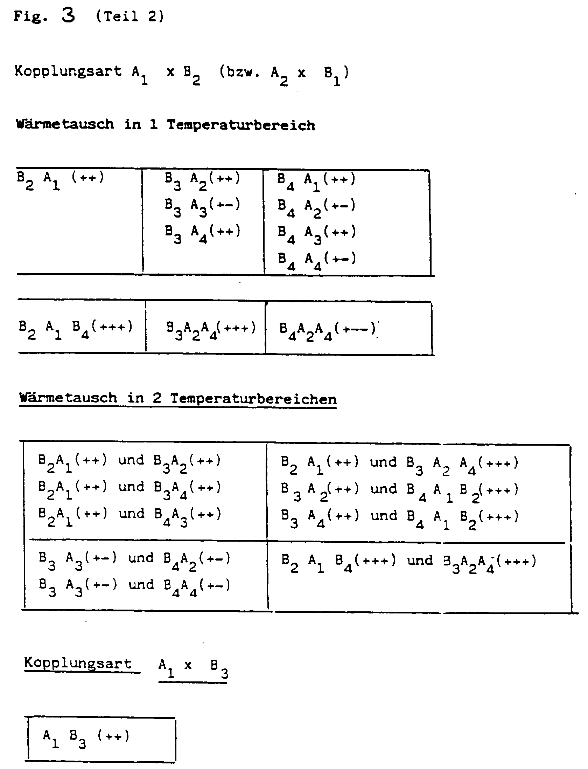

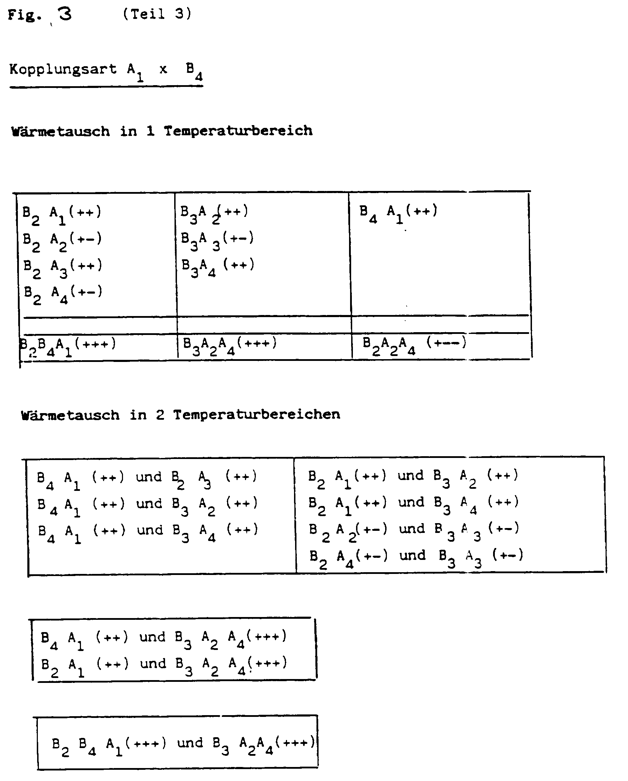

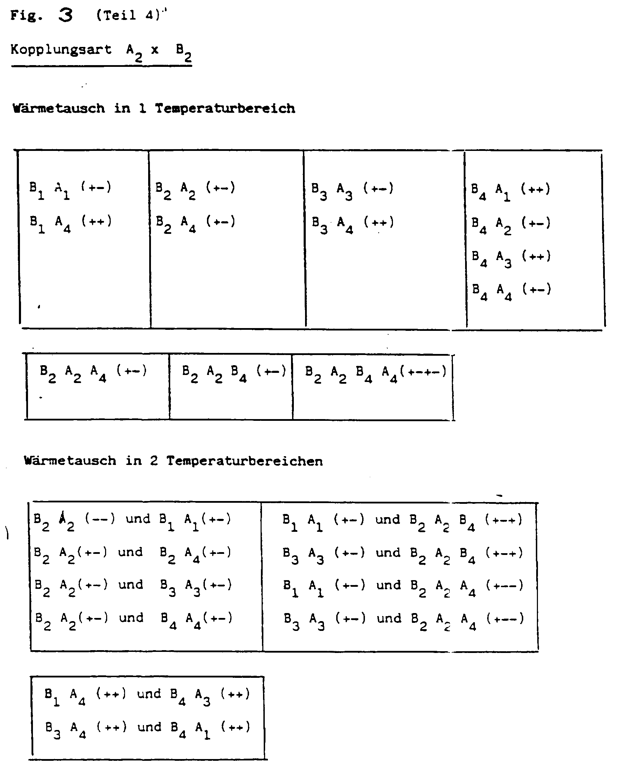

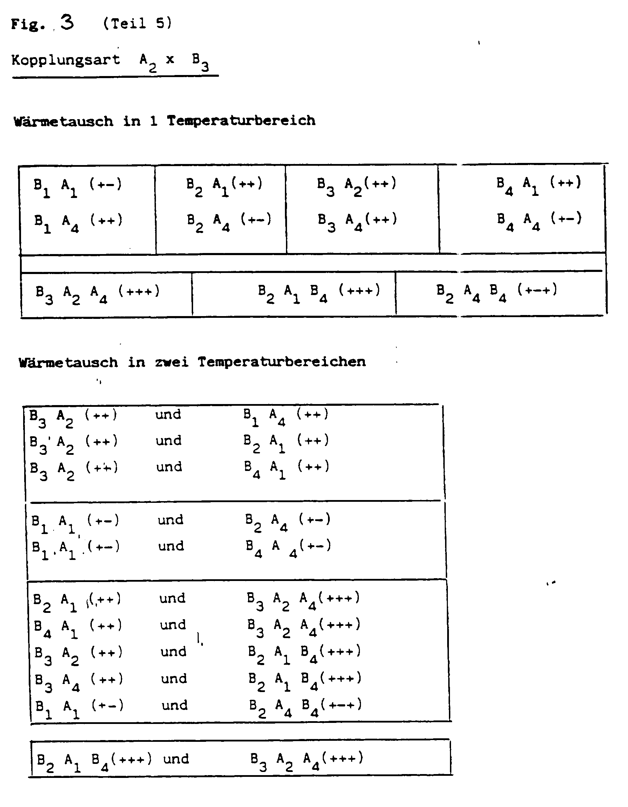

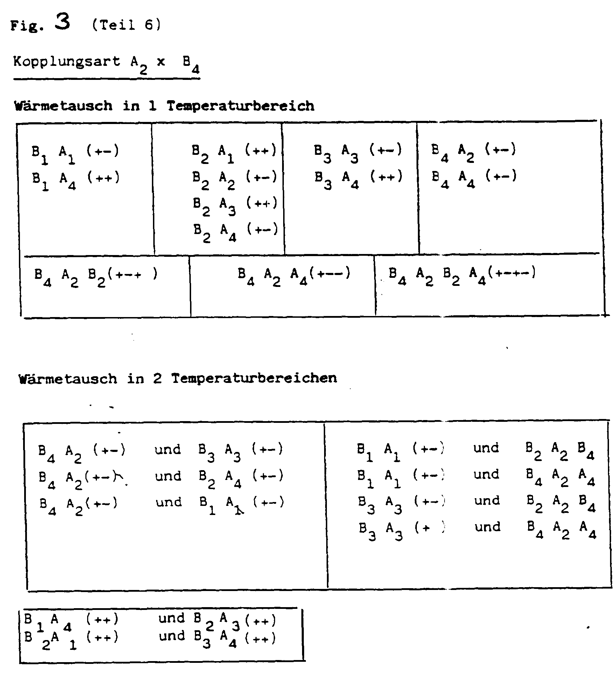

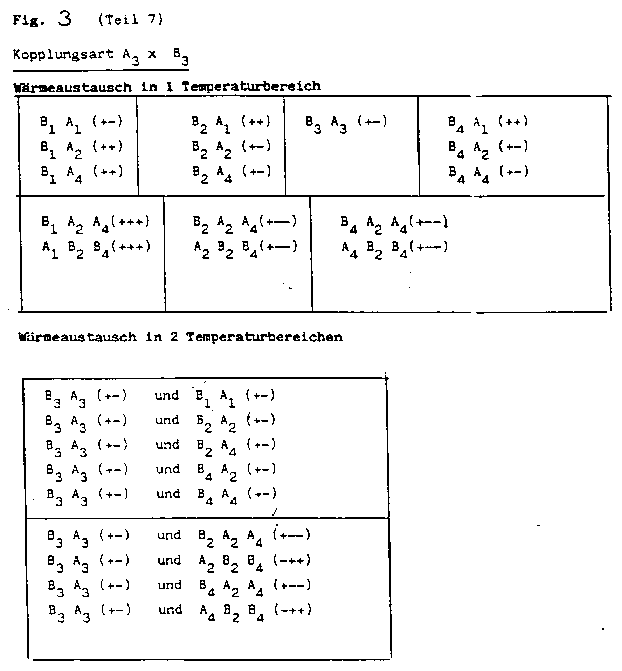

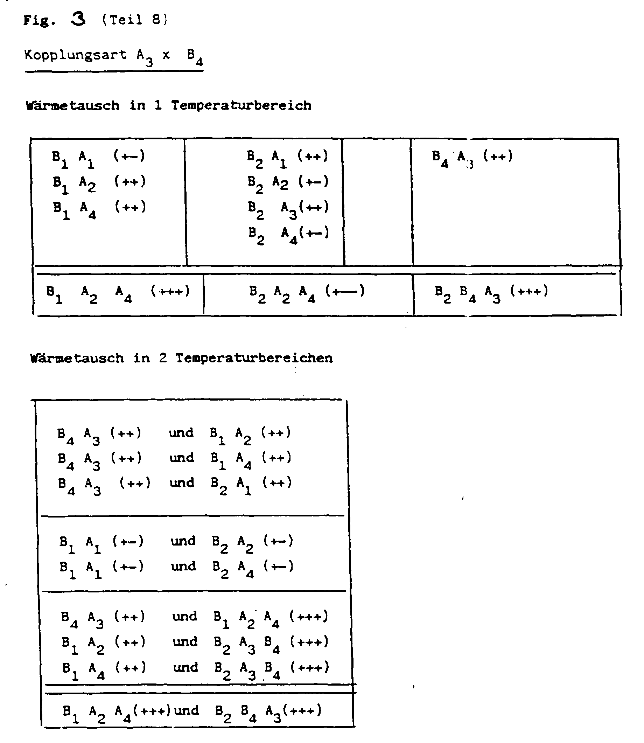

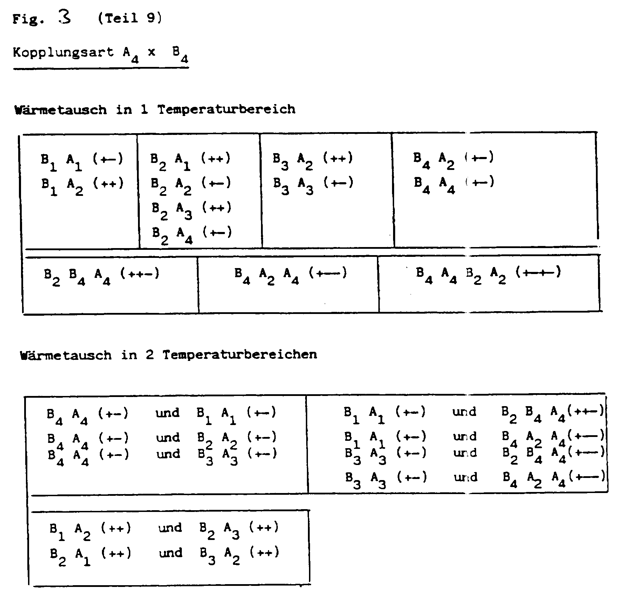

In Fig. 3 sind für die Einrichtungen gem. Fig. 2 tabellarisch die Austauscheinheiten aufgeführt, zwischen denen ein innerer Wärmetausch durchgeführt werden kann. Dabei bedeutet $B_iA_j$, daß ein Wärmetausch zwischen der Austauscheinheit i des Kreises B und der Austauscheinheit j des Kreises A erfolgen kann. Die in Klammern stehenden Vorzeichen geben den relativen Umlaufsinn des Arbeitsfluids in den betreffenden Kreisen an, d.h. wenn in einer Klammer sowohl das Minuszeichen als auch das Pluszeichen vorkommt, muß der Umlaufsinn in den beiden Kreisen entgegengesetzt, sonst gleichsinnig sein.

Tabelle 1

| Betriebsbereich | | 1 | 2 | 3 | 4 | 5 | 6 | 7 | 8 |
|---|---|---|---|---|---|---|---|---|---|
| Nettowärmeumsatz | $Q_3$ | + | + | + | + | - | - | - | - |
| | $Q_2$ | + | - | - | - | - | + | + | + |
| | $Q_1$ | - | - | + | + | + | + | - | - |
| | $Q_0$ | + | + | + | - | - | - | - | + |

Tabelle 2

| Betriebsbereich | 1 | 2 | 3 | 4 | 5 | 6 | 7 | 8 | 9 | 10 | 11 |
|---|---|---|---|---|---|---|---|---|---|---|---|
| $Q_4$ | + | + | + | + | + | + | + | + | + | + | + |
| $Q_3$ | + | + | + | + | - | - | - | - | - | - | - |
| $Q_2$ | + | - | - | - | - | + | + | + | - | - | + |
| $Q_1$ | - | - | + | + | + | + | - | - | - | + | + |
| $Q_0$ | + | + | + | - | - | - | - | + | + | + | + |

Tabelle 2   (fortgesetzt)

| Betriebsbereich | 1 | 2 | 3 | 4 | 5 | 6 | 7 | 8 | 9 | 10 | 11 |
|---|---|---|---|---|---|---|---|---|---|---|---|
| Betriebsbereich | 12 | 13 | 14 | 15 | 16 | 17 | 18 | 19 | 20 | 21 | 22 |
| $Q_4$ | - | - | - | - | - | - | - | - | - | - | - |
| $Q_3$ | - | - | - | - | + | + | + | + | + | + | + |
| $Q_2$ | - | + | + | + | + | - | - | - | + | + | - |
| $Q_1$ | + | + | - | - | - | - | + | + | + | - | - |
| $Q_0$ | - | - | - | + | + | + | + | - | - | - | - |

Nicht Gegenstand der Erfindung sind Einrichtungen mit einer Schaltung, wie sie in Fig. 2 im linken Bild der Klasse $A_2xB_3$ (und im rechten Bild der Klasse $A_3xB_2$) dargestellt ist oder mit einer Schaltung der Klasse $A_3xB_3$, bei welchen Schaltungen jeweils das Arbeitsfluid beiden Absorberkreisen im gleichen Sinn zirkuliert und bei denen ferner kein innerer Wärmetausch durchgeführt wird.

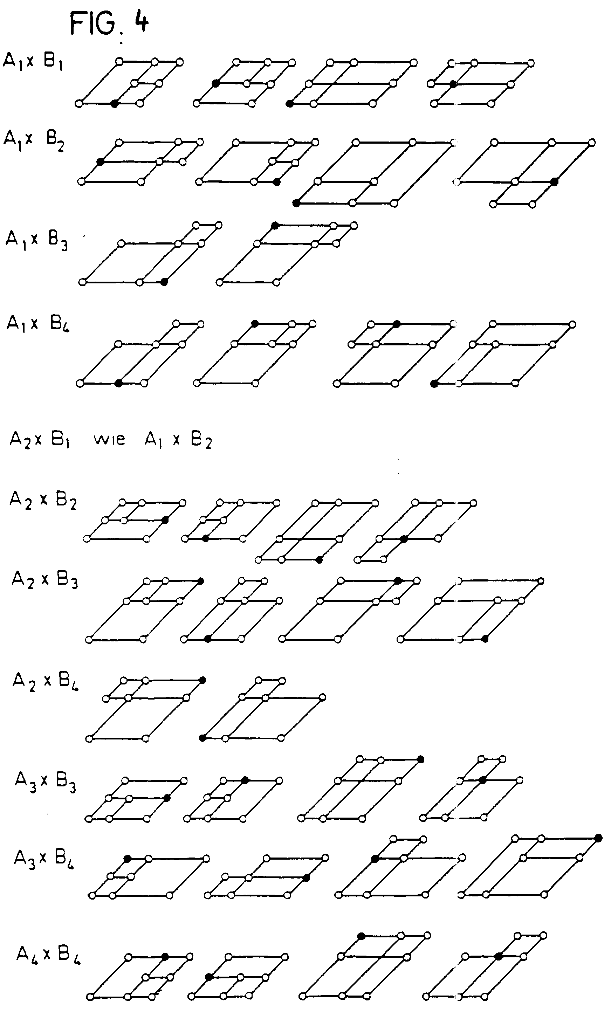

Bei Wärmetausch in einem Temperaturbereich kann der Wärmetausch durch geeignete Wahl der Arbeitsfluidströme m und n vollständig gemacht werden. Bei einem Wärmetausch in zwei Temperaturbereichen ist ein vollständiger Wärmetausch in beiden Temperaturbereichen im allgemeinen nicht möglich. man kann jedoch immer einen vollständigen Wärmetausch in beiden Temperaturbereichen erreichen, wenn man die betreffende Einrichtung durch eine zusätzliche Austauscheinheit so ergänzt, daß ein dritter unabhängiger Absorberkreislauf entsteht. Hierfür gibt es für die Einrichtungen gem. Fig. 2 jeweils zwei Möglichkeiten, die in Fig. 4 dargestellt sind. Die zusätzliche Austauscheinheit ist durch einen ausgefüllten Kreis dargestellt. Da bei den Einrichtung en gem. Fig. 2 in vielen Fällen die Bedingungen für einen vollständigen inneren Wärmetausch in beiden Temperaturbereichen nahezu erfüllt werden können, braucht der Arbeitsfluid- und Wärmeumsatz in der zusätzlichen Austauscheinheit nur relativ klein zu sein. Die zusätzliche Austauscheinheit kann daher in solchen Fällen klein im Vergleich zu den anderen sieben Austauscheinheiten dimensioniert werden. Außerdem können der Wärmeumsatz und/oder der Arbeitsfluidumsatz und/oder die Temperatur und/oder der Druck der zusätzlichen Austauscheinheit zu Steuer- und Regelzwecken verwendet werden.

Bei den Einrichtungen gemäß Fig. 2 kann ein Umschalten zwischen verschiedenen Schaltungsklassen mit den durchgeführt werden, wenn entsprechende Gas-Verfindüngsleitüngen mit Absperrventilen vorgesehen werden, wie es in EP-A-0 061 721 erläutert ist. Es lassen sich nämlich die Schaltungen der Klassen $A_1xB_1$, $A_1xB_4$, $A_4xB_4$ durch Gasleitungsventile ineinander umschalten, ferner lassen sich ineinander umschalten die Schaltungen der Klassen $A_2xB_2$, $A_2xB_3$ und $A_3xB_3$ und schließlich lassen sich ineinander umschalten die Schaltungen der Klassen $A_1xB_2$, $A_1xB_3$, $A_2xB_4$ und $A_3xB_4$.

In den Figuren 5a und 5b sind vorteilhafte Einrichtungen für das Arbeitsmittelsystem $NH_3/H_2O$ dargestellt, wobei die Einrichtung gem. Fig. 5a bevorzugt wird. In allen Einrichtungen soll das Arbeitsfluid in Gegenuhrzeigerrichtung zirkulieren. Zwischen den durch eine Schlangenlinie verbundenen Austauscheinheiten findet ein innerer Wärmeaustausch in Pfeilrichtung statt.

Die Einrichtung gem. Fig. 5a hat für Kälteerzeugung einen Wirkungsgrad, der dreimal so groß ist wie der einer einfachen Kältemaschine gem. Fig. 1. Die Einrichtung gem. Fig. 5a hat außerdem den Vorteil, daß der Austauscheinheit B zusätzlich Wärme zugeführt werden kann; hierdurch wird die Kälteleistung der im niedrigsten Temperaturbereich arbeitenden Austauscheinheiten erhöht.

## Patentansprüche

1. Mehrstufige Einrichtung zum Nutzbarmachen von Wärmeenergie, mit mehreren Austauscheinheiten, die in mindestens zwei Arbeitsmittelkreisläufen und mindestens zwei Absorptionsmittelkreisläufen enthalten sind, in denen Druck- und Temperaturniveaus des Arbeitsmittels durch Zuführung beziehungsweise Entnahme von Wärme geändert werden, wobei unter Austauscheinheit Austreiber (Desorber), Kondensatoren, Verdampfer und Absorber (Resorber) zu verstehen sind , **dadurch gekennzeichnet**, daß die Einrichtung zwei Arbeitsmittelkreisläufe ($A_1$ bis $A_4$; $B_1$ bis $B_4$) mit insgesamt sieben Austauscheinheiten enthält, von denen eine ($A_ixB_j$) beiden Kreisläufen gemeinsam ist (Fig. 2);
wobei bei einer Einrichtung, bei der jeweils zwei Austauscheinheiten in einem oberen und einem unteren Druckbereich und drei Austauscheinheiten in einem mittleren Druckbereich arbeiten, die gemeinsame Austauscheinheit im niedrigsten Temperaturbereich des mittleren Druckbereiches arbeitet und das Arbeitsmittel in beiden Kreisläufen im Sinne eines Wärmepumpenbetriebes zirkuliert, zusätzlich eine der Bedingungen a) und b) erfüllt ist:

a) zwischen mindestens zwei Austauscheinheiten, findet ein innerer Wärmeaustausch statt;
b) bei vorgegebenen Drücken hat das Arbeitsmittelsystem einer Absorptionsmittelkreislaufes, welcher einen mit einem höheren Druck arbeitenden von zwei Austreibern enthält, eine Dampfdruckkurve, die bei höherer Temperatur liegt als die Dampfdruckkurve des Arbeitsmittelsystems in einem Absorptionsmittelkreislauf, der den anderen, bei niedrigerem Druck arbeitenden Austreiber enthält;

und wobei bei einer Einrichtung, bei der jeweils zwei Austauscheinheiten in einem höheren und einem mittleren Druckbereich und drei Austauscheinheiten in einem unteren Druckbereich arbeiten, die gemeinsame Austauscheinheit im niedrigsten Temperatur- und Druckbereich arbeitet und das Arbeitsmittel in beiden Kreisläufen im gleichen Sinne zirkuliert, zwischen mindestens zwei Austauscheinheiten ein innerer Wärmeaustausch stattfindet.

2. Einrichtung nach Anspruch 1, dadurch gekennzeichnet, daß die gemeinsame Austauscheinheit (A1, B1) in beiden Arbeitsmittelkreisläufen im obersten Temperaturbereich des obersten Druckbereiches arbeitet.

3. Einrichtung nach Anspruch 1, gekennzeichnet durch

- eine erste ($A_1B_1$), eine zweite ($B_2$) und eine dritte ($A_2$) Austauscheinheit, die miteinander verbunden sind und in einem oberen Druckbereich arbeiten, wobei die erste ($A_1B_1$), die beiden Kreisläufen gemeinsam ist, in einem oberen, die zweite ($B_2$), in einem mittleren und die dritte ($A_2$) in einem unteren Temperaturbereich dieses Druckbereiches arbeiten,
- eine vierte und eine fünfte Austauscheinheit ($B_4$, $B_3$), die miteinander verbunden sind und in einem mittleren Druckbereich arbeiten, wobei die vierte ($B_4$) in einem hohen Temperaturbereich und die fünfte ($B_3$) in einem niedrigeren Temperaturbereich dieses Druckbereiches arbeitet,
- eine sechste und eine siebente Austauscheinheit ($A_3$, $A_4$), die miteinander verbunden sind und in einem niedrigen Druckbereich arbeiten wobei die sechste ($A_3$) in einem unteren und die siebente ($A_4$) in einem oberen Temperaturbereich dieses Druckbereiches arbeiten,
- und wobei die fünfte Austauscheinheit ($B_3$) mit der zweiten ($B_2$) und der vierten ($B_4$) Austauscheinheit verbunden ist, die sechste ($A_3$) mit der dritten ($A_2$) Austauscheinheit verbunden ist, und die siebente ($A_4$) mit der vierten ($B_4$) Austauscheinheit verbunden ist.

4. Einrichtung nach Anspruch 3, gekennzeichnet durch eine weitere Austauscheinheit, die im untersten Druckbereich arbeitet, zwischen die sechste und die siebente Austauscheinheit geschaltet ist und außerdem mit der fünften Austauscheinheit verbunden ist.

5. Einrichtung nach Anspruch 3, gekennzeichnet durch eine weitere Austauscheinheit, die im mittleren Druckbereich arbeitet, zwischen die dritte und die sechste Austauscheinheit geschaltet ist und außerdem mit der fünften Austauscheinheit verbunden ist.

6. Einrichtung nach Anspruch 1, dadurch gekennzeichnet daß die gemeinsame Austauscheinheit ($A_3$, $B_3$) in beiden Arbeitsmittelkreisläufen im unteren Temperaturbereich des untersten Druckbereiches arbeitet.

7. Einrichtung nach Anspruch 6, gekennzeichnet durch

- eine erste und eine zweite Austauscheinheit, die in einem oberen Druckbereich und einem oberen bzw. unteren Temperaturbereich dieses Druckbereiches arbeiten,
- eine dritte und eine vierte Austauscheinheit, die miteinander verbunden sind, in einem mittleren Druckbereich und einem oberen bzw. einem unteren Temperaturbereich dieses Druckbereiches arbeiten, wobei die vierte mit der zweiten Austauscheinheit verbunden ist,
- eine fünfte, eine sechste und eine siebente Austauscheinheit, die in einem unteren Druckbereich und einem oberen, einem mittleren bzw. einem niedrigen Temperaturbereich dieses Druckbereiches arbeiten, wobei außerdem die fünfte mit der ersten Austauscheinheit verbunden ist, die sechste mit der dritten Austauscheinheit verbunden ist, und die siebente, die die beiden Arbeitsmittelkreisläufen gemeinsame Austauscheinheit ist, außerdem mit der vierten Austauscheinheit verbunden ist.

8. Einrichtung nach Anspruch 7, gekennzeichnet durch eine achte Austauscheinheit, die im mittleren Druckbereich und in einem Temperaturbereich arbeitet, der höher ist als der, in dem die dritte Austauscheinheit arbeitet, und die mit der ersten, der dritten und der fünften Austauscheinheit verbunden ist.

9. Einrichtung nach Anspruch 7 oder 8, gekennzeichnet durch einen inneren Wärmetausch zwischen der zweiten und dritten Austauscheinheit sowie zwischen der fünften und der dritten Austauscheinheit.

10. Einrichtung nach Anspruch 1, gekennzeichnet durch

- eine erste ($A_1$), eine zweite ($A_2B_1$) und eine dritte ($B_2$) Austauscheinheit, die in einem oberen Druckbereich und einem oberen, einem mittleren bzw. einem unteren Temperaturbereich dieses Druckbereiches arbeiten,
- eine vierte ($B_4$) und eine fünfte ($B_3$) Austauscheinheit, die in einem mittleren Druckbereich und einem oberen bzw. unteren Temperaturbereich dieses Druckbereiches arbeiten,
- eine sechste ($A_4$) und eine siebente ($A_3$) Austauscheinheit, die in einem niedrigen Druckbereich und einem oberen bzw. unteren Temperaturbereich dieses Druckbereiches arbeiten, wobei Verbindungen vorgesehen sind zwischen:
- der ersten Austauscheinheit ($A_1$) und der zweiten ($A_2B_1$) sowie der sechsten ($A_4$) Austauscheinheit,
- der zweiten ($A_2B_1$) und der dritten ($B_2$) sowie der vierten ($B_4$) Austauscheinheit,
- der dritten ($B_2$) und der fünften ($B_3$) Austauscheinheit,
- der vierten ($B_4$) und der fünften ($B_3$) sowie der siebenten ($A_3$) Austauscheinheit, und
- der sechsten ($A_4$) und der siebenten ($A_3$) Austauscheinheit, und durch einen inneren Wärmetausch zwischen der sechsten ($A_4$) und der zweiten ($A_2B_1$) Austauscheinheit.

11. Einrichtung nach Anspruch 1, gekennzeichnet durch

- eine erste ($A_1$) und eine zweite ($A_2$) Austauscheinheit, die in einem oberen Druckbereich und einem oberen bzw. einem unteren Temperaturbereich dieses Druckbereiches arbeiten,
- eine dritte ($B_1$) und eine vierte ($B_2$) Austauscheinheit, die in einem mittleren Druckbereich und einem oberen bzw. unteren Temperaturbereich dieses Druckbereiches arbeiten,
- eine fünfte ($B_4$), eine sechste ($A_4B_3$) und eine siebente ($A_3$) Austauscheinheit, die einem niedrigen Druckbereich und einem oberen, einem mittleren bzw. unteren Temperaturbereich dieses Druckbereiches arbeiten, wobei Verbindungen vorgesehen sind zwischen:
- der ersten ($A_1$) Austauscheinheit und der zweiten ($A_2$) sowie der vierten ($B_2$),
- der zweiten ($A_2$.)Austauscheinheit und der siebenten ($A_3$),
- der dritten ($B_1$) Austauscheinheit und der vierten ($B_2$) sowie der fünften ($B_4$),
- der vierten ($B_2$) Austauscheinheit und der sechsten ($A_4B_3$), und
- der sechsten Austauscheinheit ($A_4B_3$) und der fünften ($B_4$) sowie der siebenten ($A_3$), und durch einen inneren Wärmetausch zwischen der zweiten ($A_2$) und der sechsten ($A_4B_3$) Austauscheinheit.

12. Einrichtung nach einem der vorhergehenden Ansprüche, dadurch gekennzeichnet, daß sie mindestens je einen auf dem Prinzip des Wärmetransformators arbeitenden Absorberkreislauf und mindestens je einen auf dem Prinzip der Wärmepumpe arbeitenden Kreislauf enthält.

13. Einrichtung nach einem der vorhergehenden Ansprüche, gekennzeichnet durch zusätzliche Arbeitsmittelleitungen, die jeweils ein Absperrventil enthalten und eine Umschaltung zwischen verschiedenen Arten von mehrstufigen Einrichtungen ermöglichen.

14. Verfahren zum Betrieb einer Einrichtung gemäß einem der vorhergehenden Ansprüche, dadurch gekennzeichnet, daß der Arbeitsmitteldurchsatz mindestens zweier Arbeitsmittelkreisläufe getrennt veränderbar ist und daß mindestens einer der Betriebsparameter Druck, Temperatur und Arbeitsmitteldurchsatz einer Austauscheinheit, die beiden Kreisläufen angehört, als Regelgröße für die Einrichtung verwendet wird.

## Claims

1. Multistage apparatus for using heat energy including a plurality of exchange units, which are included in at least two working medium circuits and at least two absorbing medium circuits, in which the pressure and temperature levels of the working medium are altered by supplying or removing heat, whereby "exchange unit" means generators (desorbers), condensers, evaporators and absorbers (resorbers), characterised in that the apparatus includes two working medium circuits ($A_1$ to $A_4$; $B_1$ to $B_4$) with a total of seven exchange units, of which one ($A_i$ x $B_j$) is common to both circuits (Fig. 2); whereby in an apparatus in which two exchange units operate in each of an upper and a lower pressure range and three exchange units operate in a middle pressure range, the common exchange unit operates in the lowest temperature range of the middle pressure range and the working medium in the two circuits circulates in the manner of a heat pump, and additionally one of the conditions (a) and (b) is fulfilled:

(a) internal heat exchange takes place between at least two exchange units;
(b) at predetermined pressures the working medium system of an absorbing medium circuit, which includes one of two generators which operates with a higher pressure, has a vapour pressure characteristic which is at a higher temperature than the vapour pressure characteristic of the working medium system in an absorbing medium circuit which includes the other generator operating at lower pressure;

and whereby in an apparatus, in which two exchanger units operate in each of a higher and a middle pressure range and three exchange units operate in a lower pressure range, the common exchange unit operates in the lowest temperature and pressure range and t.he working medium circulates in both circuits in the same sense, internal heat exchange takes place between at least two exchange units.

2. Apparatus as claimed in claim 1 characterised in that the common exchange unit (A1,B1) in the two working medium circuits operates in the uppermost temperature range of the uppermost pressure range

3. Apparatus as claimed in claim 1, characterised by a first $(A_1B_1)$ , a second $(B_2)$ and a third $(A_2)$ exchange unit, which are connected together and operate in an upper pressure range, whereby the first $(A_1B_1)$, which is common to the two circuits, operates in an upper temperature range, the second $(B_2)$ operates in a middle temperature range and the third $(A_2)$ operates in a lower temperature range of this pressure range,

A fourth and a fifth exchange unit $(B_4,B_3)$, which are connected together and operate in a middle pressure range, whereby the fourth $(B_4)$ operates in a high temperature range and the fifth $(B_3)$ operates in a lower temperature range of this pressure range,
a sixth and a seventh exchange unit $(A_3,A_4)$, which are connected together and operate in a low pressure range, whereby the sixth $(A_3)$ operates in a lower temperature range and the seventh $(A_4)$ operates in an upper temperature range of this pressure range,
and whereby the fifth exchange unit $(B_3)$ is connected to the second $(B_2)$ and the fourth $(B_4)$ exchange unit, the sixth $(A_3)$ is connected to the third $(A_2)$ exchange unit and the seventh $(A_4)$ is connected to the fourth $(B_4)$ exchange unit.

4. Apparatus as claimed in claim 3, characterised by a further exchange unit, which operates in the lowermost pressure range, is connected between the sixth and seventh exchange unit and is also connected to the fifth exchange unit.

5. Apparatus as claimed in claim 3, characterised by a further exchange unit, which operates in the middle pressure range, is connected between the third and sixth exchange unit and is also connected to the fifth exchange unit.

6. Apparatus as claimed in claim 1, characterised in that the common exchange unit $(A_3,B_3)$ operates in both working medium circuits in the lower temperature range of the lowermost pressure range.

7. Apparatus as claimed in claim 6, characterised by a first and second exchange unit, which operate in an upper pressure range and an upper and lower temperature range, respectiveiy, of this pressure range,

a third and a fourth exchange unit, which are connected together and operate in a middle pressure range and an upper and a lower temperature range, respectively, of this pressure range, whereby the fourth is connected to the second exchange unit,
a fifth, a sixth and a seventh exchange unit, which operate in a lower pressure range and an upper, a middle and a lower temperature range, respectively, of this pressure range, whereby furthermore the fifth is connected to the first exchange unit, the sixth is connected to the third exchange unit and the seventh, which is the exchange unit common to the two working medium circuits, is also connected to the fourth exchange unit.

8. Apparatus as claimed in claim 7, characterised by an eighth exchange unit, which operates in the middle pressure range and in a temperature range which is higher than that in which the third exchange unit operates, and which is connected to the first, the third and the fifth exchange unit.

9. Apparatus as claimed in claim 7 or 8, characterised by internal heat exchange between the second and third exchange unit and between the fifth and the third exchange unit.

10. Apparatus as claimed in claim 1, characterised by a first ($A_1$), a second ($A_2B_1$) and a third ($B_2$) exchange unit, which operate in an upper pressure range and in an upper, a middle and a lower temperature range, respectively, of this pressure range,

a fourth ($B_4$) and a fifth ($B_3$) exchange unit, which operates in a middle pressure range and in an upper and lower temperature range, respectively, of this pressure range,

a sixth ($A_4$) and a seventh ($A_3$) exchange unit, which operate in a lower pressure range and in an upper and lower temperature range, respectively, of this pressure range, whereby connections are proviced between:

the first exchange unit ($A_1$) and the second ($A_2B_1$) and the sixth ($A_4$) exchange unit,

the second ($A_2B_1$) and the third ($B_2$) and the fourth ($B_4$) exchange unit,

the third ($B_2$) and the fifth ($B_3$) exchange unit, the fourth ($B_4$) and the fifth ($B_3$) end the seventh ($A_3$) exchange unit, and

the sixth ($A_4$) and the seventh ($A_3$) exchange unit, and by internal heat exchange between the sixth ($A_4$) and the second ($A_2B_1$) exchange unit.

11. Apparatus as claimed in claim 1, characterised by a first ($A_1$) and a second ($A_2$) exchange unit, which operate in an upper pressure range and an upper and a lower temperature range, respectively of this pressure range,

a third ($B_1$) and a fourth ($B_2$) exchange unit, which operate in a middle pressure range and in an upper and lower temperature range, respectively, of this pressure range,

a fifth ($B_4$), a sixth ($A_4B_3$) and a seventh ($A_3$) exchange unit, which operate in a low pressure range and in an upper, a middle and lower temperature range, respectively, of this pressure range, whereby connections are provided between:

the first ($A_1$) exchange unit and the second ($A_2$) and the fourth ($B_2$),

the second ($A_2$) exchange unit and the seventh ($A_3$),

the third ($B_1$) exchange unit and the fourth ($B_2$) and the fifth ($B_4$),

the fourth ($B_2$) exchange unit and the sixth ($A_4B_3$), and the sixth exchange unit ($A_4B_3$) and the fifth ($B_4$) and the seventh ($A_3$),

and by internal heat exchange between the second ($A_2$) and the sixth ($A_4B_3$) exchange unit.

12. Apparatus as claimed in one of the preceding claims, characterised in that it includes at least one absorber circuit operating on the principle of a heat transformer and at least one circuit operating on the principle of a heat pump.

13. Apparatus as claimed in one of the preceding claims, characterised by additional working medium lines which each include a shut off valve and render switching over between different types of multistage apparatus possible.

14. Method of operating an apparatus as claimed in one of the preceding claims, characterised in that the working medium throughput of at least two working medium circuits is separately variable and that at least one of the operational parameters comprising pressure, temperature and working medium throughput of an exchanger unit, which belongs to both circuits, is used as the controlled variable for the apparatus.

**Revendications**

1. Dispositif à plusieurs étages, pour l'exploitation d'energie calorifique avec plusieurs unités échangeuses, contenues dans au moins deux circuits de fluide de travail et auch moins deux circuits de fluide à absorption, dans lequels les niveaux de pression et de température du fluide de travail sont modifiés par apport, ou prélèvement, de chaleur, en entendant par unité échangeuse des appareils d'expulsion (desorbeurs), des condenseurs, des évaporateurs et des absorbeurs (résorbeurs), charactérisé en que le dispositif contient deux circuits de fluide de travail ($A_1$ à $A_4$; $B_1$ à $B_4$) avec un total de sept unités échangeuses, dont l'une ($A_i$ x $B_j$) est commune aux deux circuits (figure 2);

où dans un dispositif dans lequel châque fois deux unités échangeuses travaillant dans une plage de pression supérieure et une plage de pression inférieure et trois unités échangeuses dans une plage de pression médiane, l'unité echangeuse commune travaille dans la plage de température la plus basse de la plage de pression médiane et la fluide de travail circulant dans les deux circuits, dans le sens du fonctionnement d'une pompe à chaleur, l'une des conditions a) et b) étant en plus satisfaite:

a) un échange thermique interne est produit entre au moins deux unités échangeuses;

b) pour des pressions prédéterminées, le systeme à fluide de travail dans un circuit de fluide à absorption qui contient un de deux appareils d'expulsion travaillant à une pression plus élevée, a une courbe pression-vapeur située à une température plus elevée que la courbe pression-vapeur du système à fluide de travail dans un circuit à fluide à absorption contenant l'autre appareil d'expulsion, travaillant à un pression plus basse; et

où, pour un dispositive pour lequel respectivement deux unités échangeuses travaillant dans une plage de pression supérieure et une plage de pression médian et trois unités échangeuses travaillant dans une plage de pression inférieure, l'unité échangeuse commune travaille dans la plage de température et de pression plus basse, et le fluide de travail circulant dans le même sens dans les deux circuits, un échange de chaleur interne ayant lieu entre au moins deux unités échangeuses.

2.  Dispositif selon la revendication 1, charactérisé en ce que l'unité échangeuse ($A_1, B_1$) commune travaille dans les deux circuits de fluide de travail, dans la plage de température la plus haute et dans la plage de pression la plus haute.

3.  Dispositif selon la revendication 1, charactérisé par

    -   une première unité échangeuse ($A_1B_1$), une deuxième ($B_2$) et une troisième ($A_2$) unités échangeuses reliées ensemble et travaillant dans une plage de pression supérieure, la première ($A_1B_1$), qui est commune aux deux circuits , travaille dans une plage de température superieure, la deuxième ($B_2$) travaille dans une plage de temperature médiane et la troisième ($A_2$) travaille dans une plage de température inférieure de cette plage de pression,
    -   une quatrième et une cinquième unité échangeuse ($B_4$, $B_3$), réliées ensemble et travaillant dans une plage de pression médiane , la quatrième ($B_4$) travaillant dans une plage de température élevée et la cinquième ($B_3$) travaillant dans une plage de température basse de cette plage de pression,
    -   une sixième et une septième unité échangeuse ($A_3$, $A_4$), reliées ensemble et travaillant dans une plage de pression basse, la sixième ($A_3$) travaillant dans une plage de température inférieure et la septième ($A_4$) travaillant dans une plage de température supérieure de cette plage de pression,
    -   et la cinquième unité échangeuse ($B_3$) éteint reliée à la deuxième ($B_2$) et la quatrième ($B_4$) unité échangeuse, la sixième ($A_3$) étant reliée à la troisième ($A_2$) unité échangeuse, et la septième ($A_4$) étant reliée à la quatrième ($B_4$) unité échangeuse.

4.  Dispositif selon la revendication 3, characterisé par une unité échangeuse supplémentaire, travaillant dans la plage de pression plus basse, montée entre la sixième et la septième unité exchangeuse et reliée en outre à la cinquième unité échangeuse.

5.  Dispositif selon la revendication 3, characterisé par une unité échangeuse supplémentaire, travaillant dans la plage de pression médiane , montée entre la troisième et la sixième unité échangeuse et reliée en outre à la cinquième unité échangeuse.

6.  Dispositif selon la revendication 1, characterisé en ce que l'unité échangeuse commune ($A_3B_3$) travaille dans les deux circuits de fluide de travail, dans la plage de température inférieure de la plage de pression la plus basse.

7.  Dispositif selon la revendication 6, characterisé par

    -   une première et une deuxième unité échangeuse, travaillant dans une plage de pression supérieure et une plage de température supérieure ou inférieure de cette plage de pression,
    -   une troisième et une quatrième unité échangeuse, reliées ensemble, travaillant dans une plage de pression médiane, et dans une plage de température supérieure respectivement inférieure de cette plage de pression, la quatrième unité échangeuse étant reliée à la deuxième unit échangeuse,
    -   une cinquième, une sixième et une septième unité echangeuse, travaillant dans une plage de pression inférieure et une page de température supérieure, mediane ou basse de cette plage de pression, en outre la cinquième unité échangeuse étant reliée à la première unité échangeuse, la sixième unité échangeuse étant reliée a la troisième unité échangeuse et la septième unité échangeuse, qui est l'unité échangeuse commune aux deux circuits de fluide de travail, étant reliée en outre à la quatrième unité échangeuse.

8.  Dispositif selon la revendication 7, characterisé par une huitième unité échangeuse, travaillant dans la plage de pression médiane et dans une plage de température supérieure à celle dans laquelle travaille la troisième unité échangeuse et qui est reliée à la première, à la troisième et à la cinquième unitè échangeuse.

9. Dispositif selon la revendications 7 ou 8, characterisé par un échange de chaleur interne entre la deuxième et la troisième unité échangeuse ainsi qu'entre la cinquième et la troisième unité échangeuse.

10. Dispositif selon la revendication 1, characterisé par:

   - une première ($A_1$), une deuxième ($A_2B_1$) et une troisième ($B_2$) unité échangeuse, travaillant dans une plage de pression supérieure et dans une plage de température supérieure, médiane ou inférieure de cette plage de pression,
   - une quatrième ($B_4$) et une cinquième ($B_3$) unité échangeuse, travaillant dans une plage de pression médiane, et une plage de température supérieure ou inférieure de cette plage de pression,
   - une sixième ($A_4$) et une septième ($A_3$) unité échangeuse, travaillant dans une plage de pression basse et une plage de température supérieure ou inférieure de cette plage de pression,
     des liaisons étant prévues entre:
   - la première unité échangeuse ($A_1$) et la deuxième ($A_2B_1$) ainsi que la sixième ($A_4$) unité échangeuse,
   - la deuxième ($A_2B_1$) et la troisième ($B_2$) ainsi que la quatrième ($B_4$) unité échangeuse,
   - la troisième ($B_2$) et la cinquième ($B_3$) unité échangeuse,
   - la quatrième ($B_4$) et la cinquième ($B_3$) ainsi que la septième ($A_3$) unité échangeuse, et
   - la sixième ($A_4$) et la septième ($A_3$) unité échangeuse, et characterisé par un échange de chaleur interne entre la sixième ($A_4$) et la deuxième ($A_2B_1$) unité échangeuse.

11. Dispositif selon la revendication 1, characterisé par:

   - une première ($A_1$), une deuxième ($A_2$) unité échangeuse, travaillant dans une plage de pression supérieure et une plage de température supérieure ou inférieure de cette plage de pression,
   - une troisième ($B_1$) et une quatrième ($B_2$) unité échangeuse, travaillant dans une plage de pression médiane et une plage de température supérieure ou inférieure de cette plage de pression,
   - une cinquième ($B_4$) et une sixième ($A_4B_3$) et une septième ($A_3$) unité échangeuse, travaillant dans une plage de pression basse et une plage de temperature supérieure ou mediane ou inférieure de cette plage de pression,
     des liaisons étant prévues entre:
   - la premiere ($A_1$) unité échangeuse et la deuxième ($A_2$) ainsi que la quatrième ($B_2$),
   - la deuxième ($A_2$) unité échangeuse et la septième ($A_3$),
   - la troisième ($B_1$) unité échangeuse et la quatrième ($B_2$) ainsi que la cinquième ($B_4$),
   - la quatrieme ($B_2$) unité échangeuse et la sixième ($A_4B_3$), et
   - la sixième unité échangeuse ($A_4B_3$) et la cinquième ($B_4$) ainsi que la septième ($A_3$),

   et characterisé par un échange de chaleur interne entre la deuxième ($A_2$) et la sixième ($A_4B_3$) unité échangeuse.

12. Dispositif selon l'une des revendications précédentes, characterisé en que qu'il contient au moins une circuit d'absorption, travaillant sur le principe du transformateur de chaleur, et au moins un circuit, travaillant sur le principe de la pompe à chaleur.

13. Dispositif selon l'une des revendications précédentes, characterisé par des conduites de fluide de travail supplementaires, contenant chacune une soupape d'isolement et permettant une commutation de dérivation entre différents types de dispositifs à plusieurs étages.

14. Procédé de fonctionnement d'un dispositif selon l'une des revendications précédentes, charactérisé en ce que le débit de fluide de travail d'au moins deux circuits de fluide de travail est modifiable séparémant, et en ce qu'au moins l'un des paramètres de fonctionnement que sont la pression, la température et le debit du fluide de travail d'une unité échangeuse, qui appartient aux deux circuits, est untilisé comme grandeur de réglage pour le dispositif.

FIG.1

FIG. 5

# FIG. 2 (Teil 1)

Klasse

$A_1 \times B_1$

$A_1 \times B_2$

$A_1 \times B_3$

$A_1 \times B_4$

$A_2 \times B_1$

$A_2 \times B_2$

$A_2 \times B_3$

$A_2 \times B_4$

# FIG. 2 ( Teil 2 )

## Klasse

$A_3 \times B_1$

$A_3 \times B_2$

$A_3 \times B_3$

$A_3 \times B_4$

$A_4 \times B_1$

$A_4 \times B_2$

$A_4 \times B_3$

$A_4 \times B_4$

Fig. 3 (Teil 1)

TABELLARISCHE AUFSTELLUNG
DER MÖGLICHKEITEN DES INNEREN WÄRMETAUSCHES

SCHALTUNGEN MIT 2 ABSORBERKREISLÄUFEN A,B

Kopplungsart $A_1 \times B_1$

Wärmetausch in 1 Temperaturbereich

(zusätzlich zur gemeinsamen Austauscheinheit $A_1 = B_1$ )

| $B_1A_1$ (+-) | $B_2A_2$ (+-) | $B_3A_2$ (++) | $B_4A_2$ (+-) |
|---|---|---|---|
| | $B_2A_3$ (++) | $B_3A_3$ (+-) | $B_4A_3$ (++) |
| | $B_2A_4$ (+-) | $B_3A_4$ (++) | $B_4A_4$ (+-) |
| | $B_2A_2A_4$ (+--) | $B_3A_2A_4$ (+++) | $B_4A_2A_4$ (+—) |
| | $A_2B_2B_4$ (+--) | $A_3B_2B_4$ (+++) | $A_4B_2B_4$ (+--) |

Wärmetausch in 2 Temperaturbereichen

| | |
|---|---|
| $B_1A_1$ (+-) und $B_2 A_2$ (+-) | $B_1A_1$ (+-) und $B_2 A_2 A_4$ (+--) |
| $B_1A_1$ (+-) und $B_2 A_4$ (+-) | $B_1A_1$ (+-) und $A_2 B_2 B_4$ (-++) |
| $B_1A_1$ (+-) und $B_3 A_3$ (+-) | $B_1A_1$ (+-) und $B_4 A_2 A_4$ (+--) |
| $B_1A_1$ (+-) und $B_4 A_2$ (+-) | $B_1A_1$ (+-) und $A_4 B_2 B_4$ (-++) |
| $B_1A_1$ (+-) und $B_4 A_4$ (+-) | |

**Fig. 3** (Teil 2)

Kopplungsart $A_1 \times B_2$ (bzw. $A_2 \times B_1$)

**Wärmetausch in 1 Temperaturbereich**

| $B_2 A_1 (++)$ | $B_3 A_2 (++)$<br>$B_3 A_3 (+-)$<br>$B_3 A_4 (++)$ | $B_4 A_1 (++)$<br>$B_4 A_2 (+-)$<br>$B_4 A_3 (++)$<br>$B_4 A_4 (+-)$ |
|---|---|---|

| $B_2 A_1 B_4 (+++)$ | $B_3 A_2 A_4 (+++)$ | $B_4 A_2 A_4 (+--)$ |
|---|---|---|

**Wärmetausch in 2 Temperaturbereichen**

| $B_2 A_1 (++)$ und $B_3 A_2 (++)$<br>$B_2 A_1 (++)$ und $B_3 A_4 (++)$<br>$B_2 A_1 (++)$ und $B_4 A_3 (++)$ | $B_2 A_1 (++)$ und $B_3 A_2 A_4 (+++)$<br>$B_3 A_2 (++)$ und $B_4 A_1 B_2 (+++)$<br>$B_3 A_4 (++)$ und $B_4 A_1 B_2 (+++)$ |
|---|---|
| $B_3 A_3 (+-)$ und $B_4 A_2 (+-)$<br>$B_3 A_3 (+-)$ und $B_4 A_4 (+-)$ | $B_2 A_1 B_4 (+++)$ und $B_3 A_2 A_4 (+++)$ |

Kopplungsart $A_1 \times B_3$

| $A_1 B_3 (++)$ |
|---|

Fig. 3     (Teil 3)

Kopplungsart $A_1$ x $B_4$

**Wärmetausch in 1 Temperaturbereich**

| | | |
|---|---|---|
| $B_2 A_1 (++)$<br>$B_2 A_2 (+-)$<br>$B_2 A_3 (++)$<br>$B_2 A_4 (+-)$ | $B_3 A_2 (++)$<br>$B_3 A_3 (+-)$<br>$B_3 A_4 (++)$ | $B_4 A_1 (++)$ |
| $B_2 B_4 A_1 (+++)$ | $B_3 A_2 A_4 (+++)$ | $B_2 A_2 A_4 (+--)$ |

**Wärmetausch in 2 Temperaturbereichen**

| | |
|---|---|
| $B_4 A_1 (++)$ und $B_2 A_3 (++)$<br>$B_4 A_1 (++)$ und $B_3 A_2 (++)$<br>$B_4 A_1 (++)$ und $B_3 A_4 (++)$ | $B_2 A_1 (++)$ und $B_3 A_2 (++)$<br>$B_2 A_1 (++)$ und $B_3 A_4 (++)$<br>$B_2 A_2 (+-)$ und $B_3 A_3 (+-)$<br>$B_2 A_4 (+-)$ und $B_3 A_3 (+-)$ |

| |
|---|
| $B_4 A_1 (++)$ und $B_3 A_2 A_4 (+++)$<br>$B_2 A_1 (++)$ und $B_3 A_2 A_4 (+++)$ |

| |
|---|
| $B_2 B_4 A_1 (+++)$ und $B_3 A_2 A_4 (+++)$ |

Fig. 3 (Teil 4)

Kopplungsart $A_2$ x $B_2$

**Wärmetausch in 1 Temperaturbereich**

| | | | |
|---|---|---|---|
| $B_1$ $A_1$ $(+-)$<br><br>$B_1$ $A_4$ $(++)$ | $B_2$ $A_2$ $(+-)$<br><br>$B_2$ $A_4$ $(+-)$ | $B_3$ $A_3$ $(+-)$<br><br>$B_3$ $A_4$ $(++)$ | $B_4$ $A_1$ $(++)$<br><br>$B_4$ $A_2$ $(+-)$<br><br>$B_4$ $A_3$ $(++)$<br><br>$B_4$ $A_4$ $(+-)$ |

| | | |
|---|---|---|
| $B_2$ $A_2$ $A_4$ $(+-)$ | $B_2$ $A_2$ $B_4$ $(+-)$ | $B_2$ $A_2$ $B_4$ $A_4$ $(+-+-)$ |

**Wärmetausch in 2 Temperaturbereichen**

| | |
|---|---|
| $B_2$ $A_2$ $(--)$ und $B_1$ $A_1$ $(+-)$ | $B_1$ $A_1$ $(+-)$ und $B_2$ $A_2$ $B_4$ $(+-+)$ |
| $B_2$ $A_2$ $(+-)$ und $B_2$ $A_4$ $(+-)$ | $B_3$ $A_3$ $(+-)$ und $B_2$ $A_2$ $B_4$ $(+-+)$ |
| $B_2$ $A_2$ $(+-)$ und $B_3$ $A_3$ $(+-)$ | $B_1$ $A_1$ $(+-)$ und $B_2$ $A_2$ $A_4$ $(+--)$ |
| $B_2$ $A_2$ $(+-)$ und $B_4$ $A_4$ $(+-)$ | $B_3$ $A_3$ $(+-)$ und $B_2$ $A_2$ $A_4$ $(+--)$ |

| |
|---|
| $B_1$ $A_4$ $(++)$ und $B_4$ $A_3$ $(++)$ |
| $B_3$ $A_4$ $(++)$ und $B_4$ $A_1$ $(++)$ |

**Fig. 3** (Teil 5)

Kopplungsart $A_2$ x $B_3$

**Wärmetausch in 1 Temperaturbereich**

| $B_1$ $A_1$ (+−) | $B_2$ $A_1$ (++) | $B_3$ $A_2$ (++) | $B_4$ $A_1$ (++) |
|---|---|---|---|
| $B_1$ $A_4$ (++) | $B_2$ $A_4$ (+−) | $B_3$ $A_4$ (++) | $B_4$ $A_4$ (+−) |

| $B_3$ $A_2$ $A_4$ (+++) | $B_2$ $A_1$ $B_4$ (+++) | $B_2$ $A_4$ $B_4$ (+−+) |
|---|---|---|

**Wärmetausch in zwei Temperaturbereichen**

| | | | |
|---|---|---|---|
| $B_3$ $A_2$ (++) | und | $B_1$ $A_4$ (++) | |
| $B_3$ $A_2$ (++) | und | $B_2$ $A_1$ (++) | |
| $B_3$ $A_2$ (++) | und | $B_4$ $A_1$ (++) | |

| | | | |
|---|---|---|---|
| $B_1$ $A_1$ (+−) | und | $B_2$ $A_4$ (+−) | |
| $B_1$ $A_1$ (+−) | und | $B_4$ $A_4$ (+−) | |

| | | | |
|---|---|---|---|
| $B_2$ $A_1$ (,++) | und | $B_3$ $A_2$ $A_4$ (+++) | |
| $B_4$ $A_1$ (++) | und | $B_3$ $A_2$ $A_4$ (+++) | |
| $B_3$ $A_2$ (++) | und | $B_2$ $A_1$ $B_4$ (+++) | |
| $B_3$ $A_4$ (++) | und | $B_2$ $A_1$ $B_4$ (+++) | |
| $B_1$ $A_1$ (+−) | und | $B_2$ $A_4$ $B_4$ (+−+) | |

| | | |
|---|---|---|
| $B_2$ $A_1$ $B_4$ (+++) | und | $B_3$ $A_2$ $A_4$ (+++) |

**Fig. 3** (Teil 6)

Kopplungsart $A_2 \times B_4$

**Wärmetausch in 1 Temperaturbereich**

| | | | |
|---|---|---|---|
| $B_1 \ A_1 \ (+-)$<br>$B_1 \ A_4 \ (++)$ | $B_2 \ A_1 \ (++)$<br>$B_2 \ A_2 \ (+-)$<br>$B_2 \ A_3 \ (++)$<br>$B_2 \ A_4 \ (+-)$ | $B_3 \ A_3 \ (+-)$<br>$B_3 \ A_4 \ (++)$ | $B_4 \ A_2 \ (+-)$<br>$B_4 \ A_4 \ (+-)$ |
| $B_4 \ A_2 \ B_2 (+-+\ )$ | $B_4 \ A_2 \ A_4 (+--)$ | | $B_4 \ A_2 \ B_2 \ A_4 (+-+-)$ |

**Wärmetausch in 2 Temperaturbereichen**

| | |
|---|---|
| $B_4 \ A_2 \ (+-)$ und $B_3 \ A_3 \ (+-)$<br>$B_4 \ A_2 (+-)$. und $B_2 \ A_4 \ (+-)$<br>$B_4 \ A_2 (+-)$ und $B_1 \ A_1 \ (+-)$ | $B_1 \ A_1 \ (+-)$ und $B_2 \ A_2 \ B_4$<br>$B_1 \ A_1 \ (+-)$ und $B_4 \ A_2 \ A_4$<br>$B_3 \ A_3 \ (+-)$ und $B_2 \ A_2 \ B_4$<br>$B_3 \ A_3 \ (+\ )$ und $B_4 \ A_2 \ A_4$ |

| |
|---|
| $B_1 \ A_4 \ (++)$ und $B_2 \ A_3 (++)$<br>$B_2 \ A_1 \ (++)$ und $B_3 \ A_4 \ (++)$ |

**Fig.** 3   (Teil 7)

Kopplungsart $A_3$ x $B_3$

**Wärmeaustausch in 1 Temperaturbereich**

| | | | |
|---|---|---|---|
| $B_1$ $A_1$ (+−)<br>$B_1$ $A_2$ (++)<br>$B_1$ $A_4$ (++) | $B_2$ $A_1$ (++)<br>$B_2$ $A_2$ (+−)<br>$B_2$ $A_4$ (+−) | $B_3$ $A_3$ (+−) | $B_4$ $A_1$ (++)<br>$B_4$ $A_2$ (+−)<br>$B_4$ $A_4$ (+−) |
| $B_1$ $A_2$ $A_4$ (+++)<br>$A_1$ $B_2$ $B_4$ (+++) | $B_2$ $A_2$ $A_4$ (+−−)<br>$A_2$ $B_2$ $B_4$ (+−−) | $B_4$ $A_2$ $A_4$ (+−−)<br>$A_4$ $B_2$ $B_4$ (+−−) | |

**Wärmeaustausch in 2 Temperaturbereichen**

| | | |
|---|---|---|
| $B_3$ $A_3$ (+−) | und | $B_1$ $A_1$ (+−) |
| $B_3$ $A_3$ (+−) | und | $B_2$ $A_2$ (+−) |
| $B_3$ $A_3$ (+−) | und | $B_2$ $A_4$ (+−) |
| $B_3$ $A_3$ (+−) | und | $B_4$ $A_2$ (+−) |
| $B_3$ $A_3$ (+−) | und | $B_4$ $A_4$ (+−) |
| $B_3$ $A_3$ (+−) | und | $B_2$ $A_2$ $A_4$ (+−−) |
| $B_3$ $A_3$ (+−) | und | $A_2$ $B_2$ $B_4$ (−++) |
| $B_3$ $A_3$ (+−) | und | $B_4$ $A_2$ $A_4$ (+−−) |
| $B_3$ $A_3$ (+−) | und | $A_4$ $B_2$ $B_4$ (−++) |

**Fig. 3** (Teil 8)

Kopplungsart $A_3$ x $B_4$

Wärmetausch in 1 Temperaturbereich

| $B_1 A_1$ (+—) | $B_2 A_1$ (++) | | $B_4 A_3$ (++) |
|---|---|---|---|
| $B_1 A_2$ (++) | $B_2 A_2$ (+—) | | |
| $B_1 A_4$ (++) | $B_2 A_3$ (++) | | |
| | $B_2 A_4$ (+—) | | |
| $B_1 A_2 A_4$ (+++) | $B_2 A_2 A_4$ (+—) | | $B_2 B_4 A_3$ (+++) |

Wärmetausch in 2 Temperaturbereichen

| |
|---|
| $B_4 A_3$ (++)   und   $B_1 A_2$ (++) |
| $B_4 A_3$ (++)   und   $B_1 A_4$ (++) |
| $B_4 A_3$ (++)   und   $B_2 A_1$ (++) |
| $B_1 A_1$ (+—)   und   $B_2 A_2$ (+—) |
| $B_1 A_1$ (+—)   und   $B_2 A_4$ (+—) |
| $B_4 A_3$ (++)   und   $B_1 A_2 A_4$ (+++) |
| $B_1 A_2$ (++)   und   $B_2 A_3 B_4$ (+++) |
| $B_1 A_4$ (++)   und   $B_2 A_3 B_4$ (+++) |
| $B_1 A_2 A_4$ (+++) und   $B_2 B_4 A_3$ (+++) |

Fig. 3   (Teil 9)

Kopplungsart $A_4$ x $B_4$

Wärmetausch in 1 Temperaturbereich

| | | | |
|---|---|---|---|
| $B_1$ $A_1$ (+−) <br> $B_1$ $A_2$ (++) | $B_2$ $A_1$ (++) <br> $B_2$ $A_2$ (+−) <br> $B_2$ $A_3$ (++) <br> $B_2$ $A_4$ (+−) | $B_3$ $A_2$ (++) <br> $B_3$ $A_3$ (+−) | $B_4$ $A_2$ (+−) <br> $B_4$ $A_4$ (+−) |

| | | |
|---|---|---|
| $B_2$ $B_4$ $A_4$ (++−) | $B_4$ $A_2$ $A_4$ (+−−) | $B_4$ $A_4$ $B_2$ $A_2$ (+−+−) |

Wärmetausch in 2 Temperaturbereichen

| | |
|---|---|
| $B_4$ $A_4$ (+−)   und   $B_1$ $A_1$ (+−) <br> $B_4$ $A_4$ (+−)   und   $B_2$ $A_2$ (+−) <br> $B_4$ $A_4$ (+−)   und   $B_3$ $A_3$ (+−) | $B_1$ $A_1$ (+−)   und   $B_2$ $B_4$ $A_4$ (++−) <br> $B_1$ $A_1$ (+−)   und   $B_4$ $A_2$ $A_4$ (+−−) <br> $B_3$ $A_3$ (+−)   und   $B_2$ $B_4$ $A_4$ (+−−) <br> $B_3$ $A_3$ (+−)   und   $B_4$ $A_2$ $A_4$ (+−−) |

| |
|---|
| $B_1$ $A_2$ (++)   und   $B_2$ $A_3$ (++) <br> $B_2$ $A_1$ (++)   und   $B_3$ $A_2$ (++) |

# FIG. 4

$A_1 \times B_1$

$A_1 \times B_2$

$A_1 \times B_3$

$A_1 \times B_4$

$A_2 \times B_1$   wie   $A_1 \times B_2$

$A_2 \times B_2$

$A_2 \times B_3$

$A_2 \times B_4$

$A_3 \times B_3$

$A_3 \times B_4$

$A_4 \times B_4$